# EUROPEAN PATENT SPECIFICATION

(11) **EP 2 949 108 B1**
(45) Date of publication and mention of the grant of the patent: **12.04.2017**
(21) Application number: 14712393.9
(22) Date of filing: 26.02.2014
(51) Int. Cl.: H04L 29/08

(54) **BACKWARDS-COMPATIBLE FEATURE-LEVEL VERSION CONTROL OF AN APPLICATION USING A RESTLIKE API**
RÜCKWÄRTSKOMPATIBLE VERSIONSKONTROLLE AUF MERKMALSEBENE EINER ANWENDUNG UNTER VERWENDUNG EINES REST-API
COMMANDE DE LA VERSION CARACTÉRISTIQUE-NIVEAU RÉTROCOMPATIBLE D'UNE APPLICATION AU MOYEN D'UNE API RESTLIKE

(30) Priority: 28.02.2013 US 201361771073 P; 26.06.2013 US 201313927112
(43) Date of publication of application: 02.12.2015
(73) Proprietor: Microsoft Technology Licensing, LLC, Redmond, WA 98052 (US)
(72) Inventor: TAINE, Stephane, Redmond, Washington 98052-6399 (US); RAO, Deepak, Redmond, Washington 98052-6399 (US); YOUNIS, Shahzaib, Redmond, Washington 98052-6399 (US)
(74) Representative: Driver, Virginia Rozanne
(86) International application number: PCT/US2014/018460
(87) International publication number: WO 2014/134082

(56) References cited:
- US-A1- 2008 109 427
- US-A1- 2012 102 479
- US-A1- 2012 150 987
- John Ellingsgaard: "Mobilizing Totalview Designing Middleware for Mobile Solutions", , 1 January 2011 (2011-01-01), XP055124502, Retrieved from the Internet: URL:http://etd.dtu.dk/thesis/274365/dip10_ 59_new.pdf [retrieved on 2014-06-20]

## Description

### BACKGROUND

A distributed application is software that executes on two or more computers in a network, wherein such computers can communicate with one another over the network. Generally, in a client-server environment, a distributed application has two portions: 1) a "front end" that executes on a client computing device(s); and 2) a "back end" that executes on a server computing device(s). An instance of the distributed application executing on a client computing device is referred to herein as a "client", while an instance of the distributed application executing on a server computing device is referred to herein as a "server". A distributed application can use an application programming interface (API) to provide a common interface for communications between different executing instances, and can be used to provide services, features, and information in a way that can be understood by application developers and used by different executing instances of the application.

Web Application Program Interfaces (APIs) conventionally employed with distributed applications use link-relations to express capabilities supported by a server, wherein the use of link-relations conforms to the HATEOAS (Hypertext as the engine of application state) principle. New capabilities can be introduced by adding new link-relations; however, in conventional approaches, this negatively impacts backward compatibility.

For example, a modification made to a server may be a breaking change, in that the modification may cause a client to be incompatible with the server. In another example, a modification made to a client may be a breaking change, in that the modification causes the client to be incompatible with another client (e.g., a legacy client). For instance, when the server is changed such that it is incompatible with a client, the client will be unable to fully interact with the server.

In another example, a modification made to a server may be a non-breaking change, but such modification may nevertheless cause undesirable results. Modifying a distributed application with non-breaking changes can result in bloated clients that comprise unsupported or unused services and data. For example, client-side discovery of how a server has been updated may be difficult or impossible, as changes may only be indicated, if at all, in complex documentation that does not facilitate rapid integration of new features. Additionally, there is no mechanism for isolated feature version control in many conventional APIs, and thus it is difficult to implement non-breaking changes for distributed applications without making undesirable development sacrifices.

Furthermore, significant changes to a distributed application can require a version of a client or a server to be updated, wherein the updated version breaks previous versions and hinders backwards-compatibility. Such changes not only create interruptions of service, but also require a significant development investment. Additionally, developing a complete new version can take significantly more time than making isolated changes, and thus also impedes a rate at which new features are developed for the distributed application.

US2012/0102479 discusses a method consisting of upgrading, at a server, a service from a first version to a second version, receiving a request from a client associated with the first version of the service, sending a response to the client indicating that the server supports the second version of the service, communicating with the client using the second version of the service as a result of receiving a communication from the client utilizing the second version of the service after sending the response, and communicating with the client using the first version of the service as a result of receiving a communication from the client utilizing the first version of the service after sending the response.

US 2008/0109427 discusses an architecture for security trimming results in a document version environment. Versioned documents are stored with metadata that includes associated access rights. All versions are searched using multiple user accounts of varying levels of access that correspond to the document versions. Result sets are returned for each user account and trimmed during a merge process by considering the user rights associated with each of multiple versions of objects or documents. Each document metadata includes a scope ID that defines security rights for that document. In a two-version document (major and minor) implementation, successive queries are run as a user with rights to all minor versions, and as a user with rights to all major items, but not the minor items. The result sets are merged into a final trimmed result set by examining the rights to each item in the versioned sets that align with rights of the current user.

### SUMMARY

According to an aspect, there is provided a computing device in accordance with appended Claim 1.

According to another aspect, there is provided a method in accordance with appended Claim 7.

The following is a brief summary of subject matter that is described in greater detail herein. This summary is not intended to be limiting as to the scope of the claims.

Various technologies pertaining to an application programming interface (API) that generally complies with a representational state transfer (REST) architecture are described herein.

Such an API provides support for backwards-compatible feature-level version control of a distributed application.

An application distributed between one or more client computing devices and server computing devices (a distributed application) can use the aforementioned API in connection with updating the distributed application. In an exemplary embodiment, such distributed application can be a unified communications (UC) application, an e-commerce application, a social-networking application, some other application, or a combination thereof. A system architecture that supports the distributed application includes client computing devices in communication with server computing devices, where the client computing devices execute client-side instances of the application (clients) and the server computing devices execute server-side code (servers). The client computing devices may include desktop computing devices as well as portable computing devices such as mobile telephones, tablets (slates), phablets, wearables, etc. In accordance with aspects described herein, a UC application can use the API to support real-time synchronous communication¹ between clients and/or between a client and a server. Moreover, the UC application can additionally support asynchronous communication in real time or near-real time (e.g., a matter of microseconds). It is to be understood that the API generally complies with the REST architecture (e.g., the API is a RESTlike API).

The API is modeled using identifiers and commands, where the identifiers represent resources and the commands represent methods of interacting with resources, such as conventional hypertext-transfer-protocol (HTTP) methods and hypermedia types. A resource can be or include data, such as a document, image, database entry, etc. In another example, a resource can be or include computer-executable code, such as a service, an executable thread, etc. Furthermore, resources generally pertain to a particular concept described by their respective identifiers. For example, a "contacts" resource can include a list of contacts of a user, or can be a service that retrieves the list of contacts from other resources. Each resource is identified by a respective identifier that can be used by the client to access a respective resource. For example, the identifier can be a global identifier (e.g., such as a universal resource locator (URL)), or can be a relative identifier that is specific to the application. Resources can also comprise identifiers of other resources, so as to indicate a link-relation between resources. For example, a "features" resource can also comprise an identifier of a "contacts" resource that comprises a list of contacts of the user, thus indicating that the contacts list is a feature of the application. The client, after accessing the "features" resource and locating the identifier for the "contacts" resource, can then use the identifier for the "contacts" resource to retrieve the list of the contacts. Such link-relations can allow a client to navigate through resources in a manner that is similar to how a user can navigate through webpages using hyperlinks.

As noted above, the commands represent respective methods of interacting with resources. Exemplary methods include methods compatible with the HATEOAS principle. By combining an identifier and a command in a request, a client can identify a resource that is desirably accessed as well as an operation that is desirably executed. For example, in order to retrieve a list of contacts of a user, a client can generate a request that includes a command representing a retrieval operation and an identifier representing the "contacts" resource. Certain resources can be referred to as "endpoints", where a defined set of actions can be undertaken on such endpoints. In response to the request, the server can transmit a reply to the client that comprises the resource, a data packet comprising data from the resource, and or other information about the requested resource.

A RESTlike Web API that supports feature-level revision while also supporting backwards compatibility is described herein. Such a RESTlikeWeb API provides an interface between clients and/or servers that allows different versions of clients and/or servers to be compatible with one another. Servers can use the API to discover features that a client can support, and can provide such features in a format that the client can understand. A client can use the API to discover when a feature supported by the client has been revised on a server; accordingly, a developer can adapt the client to support new features without necessitating a completely new version of the client or perusal of complex documentation.

The RESTlike API can further support addition of new features (functionality) in a manner that does not require the creation of new resources. Rather, a resource can be revised, and such revision can be recognized by the client. A version of a resource can be a superset of all previous versions/revisions of the resource. For example, a second version of a resource can comprise an original version of the resource and a revision. Since a version of a resource is a superset of previous versions, the resource is backwards compatible. Thus, although the resource has been revised (e.g., to be a second version of the resource), the original version of the resource (with which a client is compatible) remains available to the client.

Furthermore, a client can request that the server deliver either a minimum version of a resource or a particular version of a resource with which the client is compatible. The server can also be configured to determine a version of the client that sends a request to the server, and the server can then transmit resources to the client that are compatible with the version of the client. Thus, clients and servers can be kept apprised of the other's respective version so as to maintain compatibility.

When breaking changes, or changes that would cause a server or a client to be incompatible with another client, are desirably made to a distributed application, versions of resources can be maintained independently. For example, a "contacts" resource can include a list of contacts in alphabetical order, and can be modified to include the list of contacts in order of time of communications. The modified resource may be incompatible with the client, and thus the server can maintain a first version of the resource (where the contacts are listed in alphabetical order) and can also maintain a second version of the resource (where the contacts are listed based upon time of communications with a user of the client).

Along with transmitting information about resources that are available to the client, the server can also transmit other information about the resources, such as whether a resource has been revised, a version of the resource, an indication that the resource is to be deprecated, and other information that may be relevant to the client. For example, a developer may wish to make a breaking change to a resource that is being used by the client (e.g., a particular version of the client). The developer can include information with the resource that the resource is to be deprecated in, for example, three months. Developers for the client are therefore informed of the breaking change, and can implement support for the breaking change prior to the three month deadline.

Because modifications to resources that are accessible by the client, modifications to the server, as well as other information such as when a resource is to be deprecated, can be recognized by the client, developers of the client are supplied with information that facilitates expedient implementation of new functionalities. Developers of the client are informed as to what features have been modified (and how such features have been modified) without having to consult application documentation and without having to rewrite the client.

As the RESTlike API provides backwards-compatible feature level version control, the modifications to the client and/or server need not happen contemporaneously. In some circumstances, the client and/or server may be developed by different developers or may be executed by different entities, such that a single entity may not have control over both a client and server. By offering backward-compatible feature level version control, modifications can be made to the application in a way that does not negatively impact existing clients.

The above summary presents a simplified summary in order to provide a basic understanding of some aspects of the systems and/or methods discussed herein. This summary is not an extensive overview of the systems and/or methods discussed herein. It is not intended to identify key/critical elements or to delineate the scope of such systems and/or methods. Its sole purpose is to present some concepts in a simplified form as a prelude to the more detailed description that is presented later.

### BRIEF DESCRIPTION OF THE DRAWINGS

Figs. 1 and 2 are functional block diagrams of respective exemplary systems that facilitate executing an application that supports backwards-compatible feature-level version control through use of a RESTlike API.
Fig. 3 is a flow diagram that illustrates an exemplary methodology that facilitates backwards-compatible feature-level version control of a distributed application through use of a RESTlike API at a client computing device.
Figs. 4 and 5 are flow diagrams that illustrate respective exemplary methodologies for retrieving a resource maintained by a server-side instance of a distributed application.
Fig. 6 is a flow diagram that illustrates an exemplary methodology for determining that a resource has been revised.
Figs. 7 and 8 are flow diagrams that illustrate respective exemplary methodologies for retrieving a resource maintained by a server-side instance of a distributed application.
Fig. 9 is a flow diagram that illustrates an exemplary methodology for providing a client-side instance of a distributed application with a compatible version of a resource.
Fig. 10 is a flow diagram that illustrates an exemplary methodology for modifying a resource and providing the modified resource to a client-side instance of a distributed application.
Fig. 11 is an exemplary computing system.

### DETAILED DESCRIPTION

Various technologies pertaining to backwards-compatible feature-level version control in a distributed application through use of an API that complies with the representational state transfer (REST) architecture are now described with reference to the drawings, wherein like reference numerals are used to refer to like elements throughout. In the following description, for purposes of explanation, numerous specific details are set forth in order to provide a thorough understanding of one or more aspects. It may be evident, however, that such aspect(s) may be practiced without these specific details. In other instances, well-known structures and devices are shown in block diagram form in order to facilitate describing one or more aspects. Further, it is to be understood that functionality that is described as being carried out by certain system components may be performed by multiple components. Similarly, for instance, a component may be configured to perform functionality that is described as being carried out by multiple components.

Moreover, the term "or" is intended to mean an inclusive "or" rather than an exclusive "or". That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

Further, as used herein, the terms "component" and "system" are intended to encompass computer-readable data storage that is configured with computer-executable instructions that cause certain functionality to be performed when executed by a processor. The computer-executable instructions may include a routine, a function, or the like. It is also to be understood that a component or system may be localized on a single device or distributed across several devices. Further, as used herein, the term "exemplary" is intended to mean serving as an illustration or example of something, and is not intended to indicate a preference.

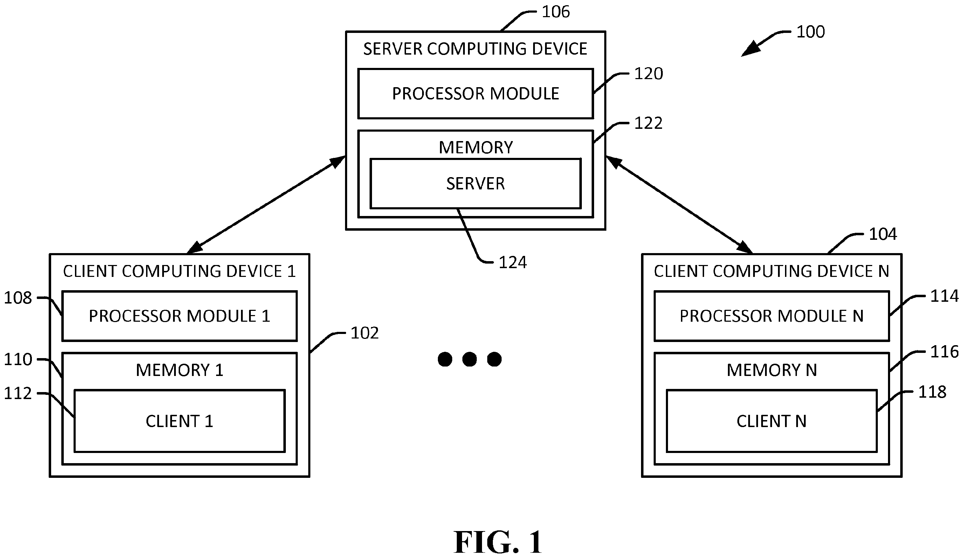

With reference now to Fig. 1, an exemplary system 100 that facilitates backwards-compatible feature-level version control in a distributed application is illustrated. The system 100 includes a plurality of client computing devices 102-104. The client computing devices 102-104 can include desktop computing devices, laptop computing devices, netbooks, ultrabooks, tablets (slates), phablets, mobile telephones, wearables, etc. The system 100 further includes a server computing device 106, which is in communication with the client computing devices 102-104 by way of suitable respective network connections. Additionally, communications channels can be established directly between computing devices in the client computing devices 102-104.

The client computing devices 102-104 and the server computing device 106 are configured to support backwards-compatible feature-level version control of a distributed application, wherein the client computing devices 102-104 execute respective client-side (front-end) instances of the distributed application and the server computing device executes a server-side instance (back-end) of the application. With more particularity, the first client computing device 102 includes a first processor module 108 that executes instructions retained in a first memory 110. The first memory 110 can include a first client-side instance of an application, referred to as a first client 112. Similarly, the Nth computing device 104 can include an *N*th processor module 114 that is configured to execute instructions in an Nth memory 116. The *N*th memory 116 includes an *N*th client-side instance of the application, referred to as an *N*th client 118.

The server computing device 106 includes a server processor module 120 that is configured to execute code in a server-side memory 122. For example, the server-side memory 122 can include server-side code (e.g., back end code) of the distributed application, wherein the server-side code is referred to herein as a server 124. In an exemplary embodiment, the distributed application can be a communications application that supports bi-directional communications between the client computing devices 102-104. For instance, the communications application can be a unified communications (UC) application, which supports multiple communications modalities, including voice, presence, instant messaging, groups, desktop sharing, collaboration, and the like. In another example, the communications application can be or be included in a social networking application.

As new features are developed for the distributed application, it may be desirable to modify the server 124 or at least one of the clients 102-104 to support such features. For example, the distributed application can be updated to support a feature, wherein the server 124 is modified to maintain additional data/code, and wherein the client 112 is desirably modified to remain compatible with the server 124. Through utilization of the RESTlike API, different versions of resources used by the distributed application can be maintained, different versions of clients and/or servers can be maintained, etc. Further, backwards-compatible feature-level version control can be provided, wherein individual features offered by the distributed application can be revised independent of a remainder of the distributed application. Thus, in an example, modifying the server 124 need not impact the compatibility of the first client 112 with the server 124.

As indicated above, the distributed application may be a communications application, and the first client 112 can cause a graphical user interface (GUI) to be displayed on a display screen (not shown) of the first client computing device 102, wherein the GUI includes, for example, contacts for a user of the first client 112, messages received by the first client 112, etc. Likewise, the server 124 can access a listing of contacts of the user, messages sent and received via the first client 112, and other data, which is used to populate the GUI. When the user of the first client computing device 102 seeks to send a communication to a contact (e.g., the user of the *N*th client computing device 104), the first client 112 can communicate with the *N*th client 118 *via* the server 124 or *via* a channel established by the server 124. The server 124, in addition to routing the communication, can also send other information to the first client 112 in real-time, such as that the contact is available to receive messages.

As will be described in greater detail herein, the RESTlike API is modeled in terms endpoints, which are resources upon which certain actions can be undertaken. Resources are represented by respective identifiers, and actions (e.g., methods of interacting with resources) are represented by commands, such as conventional hypertext-transfer-protocol (HTTP) methods and hypermedia types. For example, a resource including a contacts list can be an endpoint, and retrieval of such list can be supported. Accordingly, a resource can be or include data, such as a document, an image, etc. Additionally, a resource can be or include a computer-executable service that comprises computer-executable instructions that cause the server 124 to communicate with other computing devices. Further, a resource can be or include a combination of data and computer-executable instructions. Additionally, each resource can be directed towards a respective concept described by its identifier. For example, a "contacts" resource can include a list of contacts of a user.

Identifiers can be global identifiers, such as a universal resource locator (URL), or can be relative identifiers specific to the distributed application. A resource can also comprise an identifier of another resource (or multiple resources), so as to indicate a link-relation between the resource and the another resource. For example, a "features" resource can also comprise a link-relation to a "contacts" resource; e.g., the "features" resource can comprise an identifier of the "contacts" resource, wherein the contacts resource comprises a list of contacts of the user. The first client 112, after accessing the "features" resource (e.g., from the server 124) and locating the identifier for the "contacts" resource therein, can then use the identifier for the "contacts" resource to access the list of contacts. Such link-relations can allow the first client 112 to navigate through resources in a manner that is similar to how a user can navigate through webpages using hyperlinks.

A particular resource of the distributed application can be an entry endpoint for the application, and can include link-relations to other resources. For example, a client with information only of the entry endpoint "features" resource can navigate to the features resource in order to retrieve link-relations comprised by the "features" resource, and thereby learn what resources are available for the client. Thereafter, the client can navigate to resources identified in the link-relations.

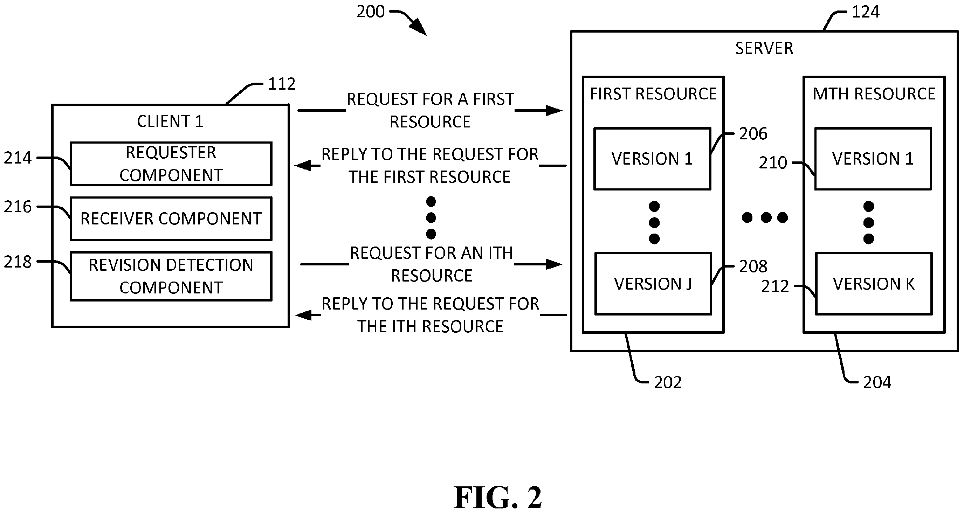

Referring now to Fig. 2, an exemplary system 200 that facilitates backwards-compatible feature-level version control through utilization of a RESTlike API is illustrated. The system 200 comprises the first client 112 that is in communication with the server 124 through utilization of the RESTlike API. In another embodiment, the server 124 can be replaced with the *N*th client 118, such that the first client 112 and the *N*th client 118 are in direct communication with one another. The RESTlike API, as noted above, is modeled using identifiers and commands. Such identifiers and commands can be universal, in that they may be used without regard to a specific application being executed, a specific device being communicated with, or a specific operation being undertaken, and thus provide a generalized interface between devices.

Resources corresponding to the RESTlike API are now described. As shown, the server 124 can comprise or have access to a plurality of resources (e.g., a first resource 202 through an *M*th resource 204). The format of a resource is arbitrary, as a resource can be structured as a database, a file, etc. Identifiers can respectively represent the resources 202-204, wherein a resource can comprise at least one of data (such as a document, an image, a database entry or entries, etc.), computer-executable code, or the like. Each resource pertains to a respective concept (e.g., which can be described by an identifier for the resource).

A resource can also comprise identifier(s) of other resource(s), so as to indicate a link-relation to the other resource(s). For example, the first resource 202 can be a "features" resource, and thus may comprise a listing of link-relations for resources available to the first client 112, including a link-relation to the *M*th resource 204. For example, the *M*th resource 204 can be a "contacts" resource, which is linked to by the "features" resource as follows:

| link rel | Href |
|---|---|
| contacts | http://example.com/features/contacts |

where "link rel" refers to relative identifiers and labels the link-relation "contacts," thus being a relative identifier of the "contacts" resource (e.g., the *M*th resource 204). "href' refers to global identifiers, where "http://example.com/features/contacts" is a global identifier of the "contacts" resource.

The server 124 can additionally maintain multiple versions/revisions of a resource, wherein a first revision of a resource can also be referred to as a second version of the resource, a second revision being a third version, and so on. It is to be understood that a version of a resource can be a superset of all previous versions of the resource; thus, a second version of a resource includes the first version of the resource and a revision to the first version of the resource. Each resource 202-204 can have a respective revision attribute, which can be used to identify a most current version as well as available versions that are available to the first client 112 (and other clients) by way of methods supported by the RESTlike API. The server 124 can maintain a first version 206 of the first resource 202 through a *J*th version 208 of the first resource 202. Similarly, the server 124 can maintain a first version 210 of the *M*th resource 204 through a *Kt*h version 212 of the *M*th resource 204. The server 124 can maintain multiple versions of a resource in a variety of manners. For example, the server 124 can separately maintain each version.

In an example, a version of a resource can be a superset of previous versions of the resource; however, separately maintaining multiple versions may involve maintaining redundant data (e.g., the first version 206 of the first resource 202 that is common to both the first version 206 of the first resource 202 and the Jth version 208 of the first resource 202). Accordingly, the first versions 206 and 210 of the resources 202-204 can be maintained, and other versions of the resources 202-204 can be revisions that can be appended to the first versions 206 and 210 of the resources 202-204. For example, rather than maintaining the first version 206 of the first resource 202 and a second version (not shown) of the first resource 202, the server 124 can maintain the first version 206 of the first resource 202 and a revision that modifies the first version 206 of the first resource 202 (e.g., thereby forming the second version of the first resource 202 while also retaining the first version 206 of the first resource 202). Thus, revisions can be appended to resources.

Methods supported by the RESTlike API (represented by commands) for interacting with resources are now described. Exemplary methods supported by the RESTlike API include conventional hypertext-transfer-protocol (HTTP) methods and hypermedia types. Thus, with more specificity, exemplary methods include a method for retrieving data from a resource (e.g., via a "GET" command), a method for adding data to a resource (e.g., via a "POST" command), a method for replacing or adding a resource (e.g., via a "PUT" command), and a method for deleting a resource (e.g., via a "DELETE" command). The first client 112 can generate a request that includes an identifier and a command, thereby identifying a resource that is desirably accessed and a method to be executed in connection with the resource. Accordingly, the first client 112 comprises a requester component 214 that is configured to access a resource in the resources 202-204 by sending a request to the server 124 that comprises an identification of a method (such as a method for retrieving data from a resource) and an identification of a global identifier of the resource that is desirably accessed.

For example, the first client 112 can navigate to an entry endpoint of the application by causing the requester component 214 to retrieve a list of resources available to the first client 112. For instance, the first client 112 can navigate to an entry endpoint of the application by requesting a "features" resource that comprises a list of resources that are available to the first client 112. The requester component 214 can transmit the following as a request for the first resource 202:
GET http://example.com/features/
where "GET" identifies the method for retrieving data, and where "http://example.com/features" is a global identifier that identifies the first resource 202 (the entry endpoint).

Responsive to receiving the request for the first resource 202 from the first client 112, the server 124 can transmit a reply to the request to the first client 112, wherein the reply includes the first resource 202. In another example, the server 124 can generate a data packet based upon content of the first resource 202, and the reply can include such data packet. For example, such data packet may be smaller in size when compared to the size of the first resource 202. Additionally, the data packet may be in a format that is more readily parsed by the first client 112 when compared to the format of the first resource 202. The data packet can also comprise additional information pertaining to the distributed application, such as, for example, data identifying a version of the server 124, data identifying a resource as a resource that is to be deprecated, etc.

In an example, the data packet can be or include a document, a listing, or the like, and may be in a structured file format such as a markup file (e.g., XML) or an object notation file (e.g., JSON). Continuing with the example where the first resource 202 comprises a list of resources available to the first client 112, such first resource 202 can include a link to the *M*th resource 204, which is a "contacts" resource that comprises a list of contacts of the user of the first client 112. When the first client 112 requests the first resource 202, the server 124 generates the data packet based upon the first resource 202, wherein the data packet can be an XML representation of a database that includes a link-relation list comprising a link relation for the *M*th resource 204, as follows:

```
       <Features>
               <link rel="contacts" href="/http://example.com/features/contacts"/>
       </Features>
```

When, as illustrated in Fig. 2, the server 124 maintains multiple versions of the *M*th resource 204, the first resource 202 can additionally include a revision attribute in the link-relation for the *M*th resource 204 that identifies a most recent version the *M*th resource 204 that is available to the first client 112, as follows:

```
       <Features>
               <link rel="contacts"
                rep="1"
                href="/http://example.com/features/contacts"/>
       </Features>
```

where "rev" is the revision attribute, and "1" indicates that a first revision of the *M*th resource 204 (e.g., a second version the *M*th resource 204) is available to the first client 112. The revision attribute can also indicate which versions of a resource are or are not available. For example, the revision attribute can be used to indicate that a second version of a resource is available, but that a third version of the resource is unavailable. Additionally, a lack of a revision attribute in the link-relation can also be considered to be a revision attribute that indicates that the current version of the resource is the only version of the resource (e.g., the first version of the resource).

Thus, when the server 124 receives a first version of a resource, there may not be a revision attribute for the resource. When the server 124 receives a revision to the resource, a revision attribute can be generated for the resource, and as additional revisions to the resource are received, the revision attribute can be incremented by one for each revision.

The first client 112 further comprises a receiver component 216 that receives the reply transmitted to the first client 112 from the server 124. For example, the receiver component 216 can receive the XML representation of the link-relation comprising the revision attribute described above. The first client 112 can thus locate the identifier of the *M*th resource 204. Once the identifier of the *M*th resource has been located, the requester component 214 can then transmit a request to retrieve the *M*th resource 204 (or data included therein) from the server 124 (e.g., using the "GET" command and the identifier for the *M*th resource 204). Effectively, then, the first resource 202 is linked to the *M*th resource 204 via the link-relation.

Additionally, since the first client 112 has already navigated to the entry endpoint of the application (e.g., by requesting the first resource 202), relative identifiers that are specific to the distributed application can be used to navigate to resources. Thus, the request for the *M*th resource 204 generated by the requestor component 214 can be as follows:
GET contacts
where "contacts" is the relative identifier of the *M*th resource 204.

Thus, rather than having to store a contacts list locally, the first client 112 can request content of the *M*th resource 204 on the server 124. Using identifiers and methods allows the first client 112 to interact with an endpoint without having to have knowledge as to how the endpoint is stored on the server computing device 106 or the way in which the server 124 implements the requested method for the endpoint.

Responsive to receiving the request for the *M*th resource 204, the server 124 can transmit a reply to the first client 112. The first client 112 need not specify a version in the request for the *M*th resource 204 in order to receive a version of the *M*th resource 204 that is compatible with the first client 112. For instance, the first client 112 can be compatible with the first version of the *M*th resource 204, and a reply from the server 124 can comprise a data packet for the *K*th version 212 of the *M*th resource 204. Since, however, the *K*th version 212 of the *M*th resource 204 comprises the first version 210 of the *M*th resource 204, the first client 112 receives a version with which the first client 112 is compatible. In an example, the server 124 can be configured to use a most recent version of the *M*th resource to generate the reply. In another example, the requester component 214 can be further configured to include data identifying a version of the client 112 in the request, and the server 124 can transmit a version of the resource known to be compatible with the version of the first client 112 in the reply.

Additionally, the requester component 214 can be further configured to request that the reply from the server 124 include a particular version (or versions) of a resource. For example, the first client 112 can be configured to support features that utilize a second version of a resource (e.g., the features are incompatible with the first version of the resource). Thus, the first client 112, in the request, can indicate that the reply is to include a version of the resource that is at least the second version of the resource, and thus is capable of supporting the aforementioned features. In another example, the requester component 214 can be configured to request that the reply include only a particular version of the resource. For example, it may be desirable to minimize a size of the reply transmitted by the server 124, and thus it may be desirable that the reply include the second version of the resource rather than a third version of the resource.

In some cases, a particular version or versions of a resource requested by the first client 112 may not be available on the server 124. When this occurs, the server 124 can be configured to include an indication in the reply that the requested version or versions of the resource is not available, and can also be configured to generate a reply that includes a different version of the resource (or data based on the different version of the resource) than the version requested by the first client 112. Thus, when not able to fully comply with a request of the first client 112, the server 124 can be configured to provide available data. In another exemplary embodiment, if the version requested by the first client 112 is not provided by the server 124, the request for the resource fails.

In addition to using data in a reply from the server 124 to make additional requests for resources, the first client 112 can be configured to determine information about versions of resources maintained by the server 124 as well as a version of the server 124. To that end, the client 112 further comprises a revision detection component 218 that can determine that a particular resource (or a data packet based on the particular resource) has been received.

The revision detection component 218 is configured to determine that a resource has been revised based at least in part upon a comparison between a revision attribute of the resource in a received reply from the server 124 and a revision attribute for a the resource in a previously received reply from the server 124. For instance, in a first communication with the server 124, the first client 112 can receive a reply that includes a data packet corresponding to the first resource 202, wherein the data packet comprises a first revision attribute that indicates that the first version 210 of the *M*th resource 204 is available to the first client 112. In a subsequently received reply from the server 124, the first client 112 can receive another data packet corresponding to the first resource 202, wherein the another data packet comprises a second revision attribute that indicates that a second version of the *M*th resource 204 is available to the first client 112. By comparing the first revision attribute and the second revision attribute, the revision detection component 218 can determine that the *M*th resource has been revised.

Such a determination can cause the first client 112 to transmit a notification that the *M*th resource 204 has been revised to a developer of the first client 112. Thus, a developer can implement an update for the first client 112 that supports the revision to the *M*th resource 204. Furthermore, because the revision attribute pertains to a particular resource (e.g., the *M*th resource 204), the developer is informed as to where and how the back-end of the distributed application has been modified without having to consult complicated documentation. Additionally, if the developer has already implemented an update that has yet to be applied to the first client 112, the determination can cause the first client 112 to seek an update or otherwise direct a user to update the first client 112.

Updates to the first client 112 and/or the server 124 need not be implemented in a particular sequence or at a particular time, as the RESTlike API can support forward and backward compatibility between clients and servers. Thus, functionality supported by clients and servers in the distributed application can evolve independently without breaking or becoming unusable together. This type of behavior is particularly well-suited in connection with relatively large distributed architectures, where it is not possible to redeploy an entire programming environment every time supported functionality changes.

It can be ascertained, however, that not all modifications to the server 124 may comprise a revision of a resource. For example, a modification can include a bug fix or other changes that may have an opaque effect on behavior of the first client 112. To that end, the revision component 218 can also be configured to determine that the server 124 has been revised based at least in part upon a comparison between data in a first reply from the server 124 that indicates that the server 124 is a particular (first) version of the back-end of the distributed application and data in a second reply from the server 124 that indicates that the server 124 is a more recent version of back-end of the distributed application.

In another example, it may be desirable for the server 124 to no longer maintain a resource or a particular version of the resource. For instance, the first client 112 can be updated such that a contacts list is no longer used/needed. Thus, the server 124 may be configured to include in the reply an indication that the resource or the particular version of the resource is to be deprecated. Optionally, the indication can include a time when the resource or the particular version of the resource is to be deprecated. Such an indication informs a developer of the first client 112 that the resource or particular version of the resource should be avoided, as it will eventually no longer be maintained by the server 124. The receiver component 216 can receive such indication, and can transmit such indication to the developer.

While revisions of resources can be used to support features compatible with different versions of clients, it may also be desirable to make modifications to a resource that would negatively impact compatibility with prior versions of the first client 112. For example, a developer for the distributed application may desire to use a new protocol or implement standards or services that are incompatible with the prior version of first client 112. The RESTlike API supports backward compatibility between the first client 112 and the server 124 in such case by maintaining independent versions of resources.

Unlike versions of resources as described above, independently maintained versions of resources are not supersets of previous versions of resources. For example, a first version of the first client 112 can be compatible with the first version 210 of the *M*th resource 204, and a second version of the first client 112 can be compatible with the *K*th version 212 of the *M*th resource 204. In some embodiments, it may be desirable to maintain the first version 210 of the *M*th resource 204 independently from the *K*th version 212 of the *M*th resource 204, to ensure compatibility with the first client 112, regardless of the version thereof.

For instance, rather than being a "features" resource that is an entry endpoint to the distributed application, the first resource 202 can be an "application versions" resource and comprise link-relations to different versions of entry endpoints of the application. Thus, a reply transmitted by the server 124 responsive to receiving a request for the first resource 202 can be as follows:

```
       <application_versions>
               <link rel="application" href="http://example.com/v1/application"/>
               <link rel="application2" href="http://example.com/v2/application"/>
               <link rel="application3" href="http://example.com/v3/application"/>
       </ application_versions >
```

wherein the first, second and third link-relations correspond to respective versions of entry endpoints the application, as indicated by their respective relation attributes. A client that is compatible with a particular version of the back-end of the distributed application can locate an entry endpoint for the particular version in the reply, and navigate to that entry endpoint.

As independently maintained versions of resources are not supersets of previous versions, a revision attribute for an independently maintained version refers to a revision to the version rather than to another version of the resource. For example, a first version of a resource can be subject to revision, such that it becomes a second version of the resource (e.g., version 1.2). Subsequently, the second version of the resource can be revised twice, such that it is a third version of the second version (e.g., version 2.3). Thus, feature-level version control can be maintained for different versions of the server, and the application can maintain backwards-compatibility with versions of the client compatible with different independent versions of the server.

Further, as indicated above, forwards compatibility is also supported, where a version of the client 112 may be updated and interact with an older version of the server 124. Thus, the client 112 can continue functioning when communicating with an older server. Conventionally, the server 124 (and other servers on the back-end of the distributed application) are each a most recent version, and may support backward compatibility to support older clients (although the clients are not able to detect resource versions/revisions and/or force certain resource versions/revisions to the server). The features described herein allow for the back-end of the distributed application to include multiple servers of varying versions, wherein such servers interact with multiple clients of varying versions, thereby supporting both forward and backward compatibility.

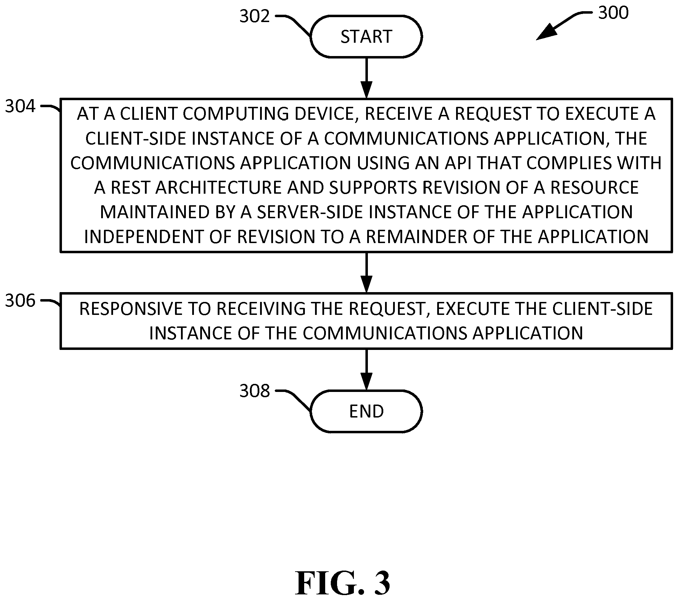

Figs. 3-11 illustrate exemplary methodologies relating to backwards-compatible feature-level version control of a distributed application through use of a RESTlike API. While the methodologies are shown and described as being a series of acts that are performed in a sequence, it is to be understood and appreciated that the methodologies are not limited by the order of the sequence. For example, some acts can occur in a different order than what is described herein. In addition, an act can occur concurrently with another act. Further, in some instances, not all acts may be required to implement a methodology described herein.

Moreover, the acts described herein may be computer-executable instructions that can be implemented by one or more processors and/or stored on a computer-readable medium or media. The computer-executable instructions can include a routine, a subroutine, programs, a thread of execution, and/or the like. Still further, results of acts of the methodologies can be stored in a computer-readable medium, displayed on a display device, and/or the like.

Referring now to Fig. 3, an exemplary methodology 300 that facilitates backwards-compatible feature-level version control of a distributed application through use of a RESTlike API at a client computing device is illustrated. The methodology 300 starts at 302, and at 304, a request is received at a client computing device to execute a client-side instance of a communications application. The communications application uses an API that complies with a REST architecture, wherein the API supports revision of a resource maintained by a server-side instance of the communications application independent of revision to a remainder of the application (e.g., the server-side instance of the application). At 306, the client-side instance of the communications application is executed on the client computing device responsive to receipt of the request. In an example, executing the client-side instance of the application comprises transmitting a request to the server-side instance of the application for a first resource. The methodology 300 completes at 308.

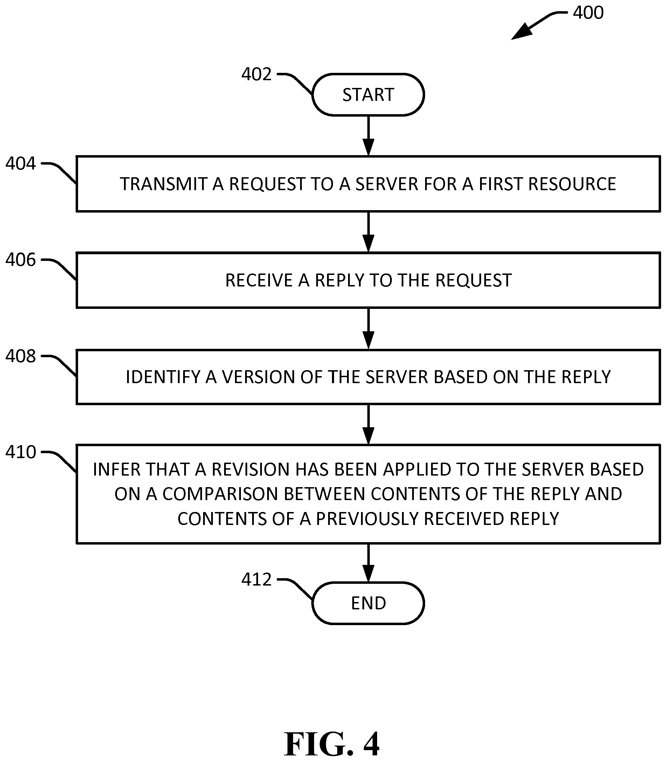

Referring now to Fig. 4, an exemplary methodology 400 pertaining to executing a client-side instance (client) of a distributed application is illustrated. The methodology 400 starts at 402, and at 404 the client transmits a request for a first resource to a server-side instance (server) of the communications application. At 406, a reply to the request for the first resource is received from the server. This reply can comprise a version of the resource requested by the client or a data packet comprising data relating to a version of the resource requested by the client. Additionally, the reply can include a data packet that indicates a version of the server, revision attributes, etc.

At 408, a version of the server can be identified based at least in part upon the reply received at 406. At 410, the client can infer that a revision has been applied to the server based on a comparison between the version of the server indicated in the reply received at 406 and a version of the server identified in a previously received reply. The methodology 400 completes at 412.

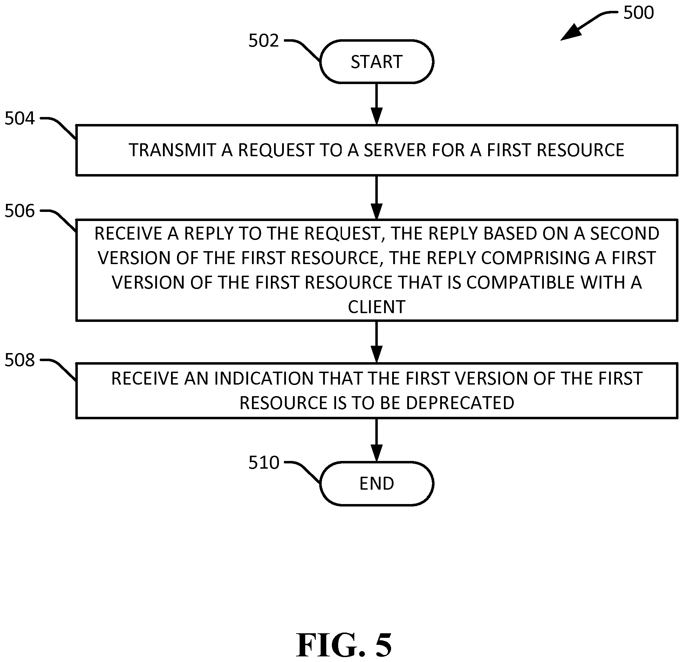

Referring now to Fig. 5, another exemplary methodology 500 pertaining to executing a client-side instance (client) of a distributed application is illustrated. The method starts at 502, and at 504 the client transmits a request to a server-side instance (server) of the distributed application for a first resource. At 506, a reply to the request is received by client, wherein the reply is based on a second version of the resource, the reply comprising a first version of the resource that is compatible with the client. The reply is additionally based on a revision that may or may not be compatible with the client.

Because at least the first version of the resource is compatible with the client, the client is compatible with the server. At 508, the client can receive an indication that the first version of the first resource is to be deprecated. Such indication can be transmitted to a developer of the client, who can then implement updates to the client that account for the deprecation of the first version of the first resource (the version of the first resource with which the client is compatible). The methodology 500 completes at 510.

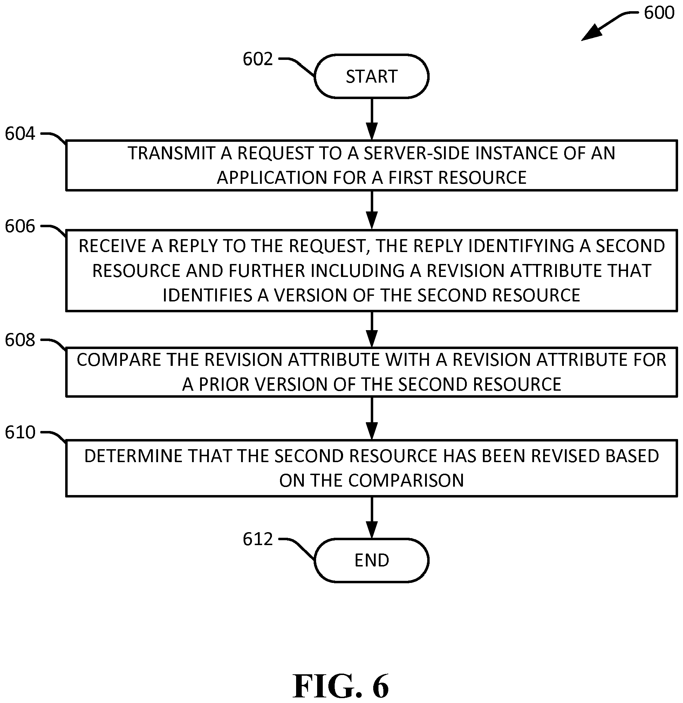

Referring now to Fig. 6, an exemplary methodology 600 for determining that a resource has been revised is illustrated. The methodology 600 starts at 602, and at 604, a client transmits a request to a server for a first resource. At 606, the client receives a reply to the request, wherein the reply comprises a revision attribute that identifies a second resource, and further identifies a version of the second resource (e.g., a first version). At 608, the client compares the revision attribute with a revision attribute in a previous reply received from the server. At 610, the client determines that the second resource has been revised based on the comparison at 608. Thereafter, a notification can be transmitted to a developer for the client, indicating that the second resource has been revised. The method concludes at 612.

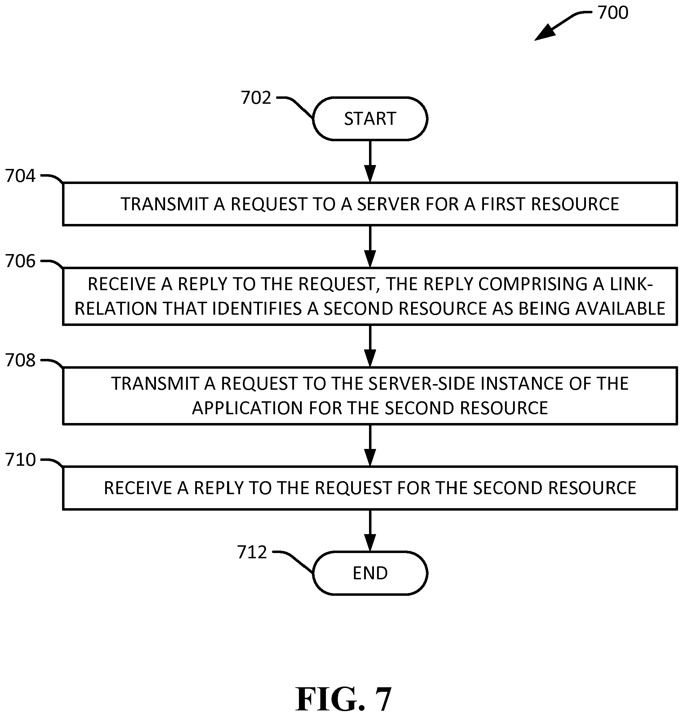

Referring now to Fig. 7, yet another exemplary methodology 700 that facilitates retrieval of a resource maintained by a server is illustrated. The methodology 700 starts at 702, and at 704 a client transmits a request to the server for a first resource. At 706, the client receives a reply to the request, wherein the reply comprises a link-relation that identifies a second resource as being available to the client. This link-relation can comprise an identifier of the second resource, and can optionally also comprise a revision attribute of the second resource. The identifier can be a relative identifier, a relation attribute that describes the subject matter of the second resource and/or a global identifier of the second resource. At 708, the client-side instance of the application transmits a request to the server for the second resource. This request can comprise the identifier for the second resource (identified by the client in the link-relation). At 710, the client receives a reply to the request for the second resource. This reply can comprise a version of the second resource or a data packet based upon the second resource, as well as other data. The methodology 700 completes at 712.

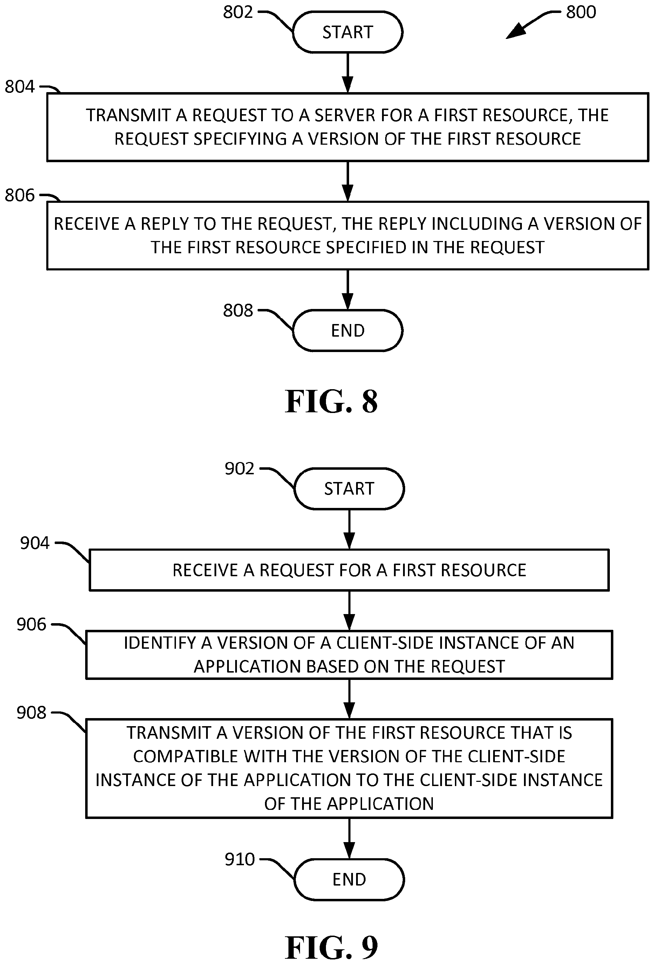

Referring now to Fig. 8, another exemplary methodology 800 that facilitates retrieving a resource maintained by a server of a distributed communications application is illustrated. The methodology 800 starts at 802, and at 804, a client transmits a request to the server for a first resource. For instance, the request can indicate that a particular version of the resource is desired. At 806, the client receives a reply to the request, wherein the reply includes the version of the first resource that was specified in the request. The methodology 800 completes at 808.

Referring now to Fig. 9, an exemplary methodology 900 that can be executed on a server computing device (that executes server-side code for a distributed communications application) is illustrated. The methodology 900 starts at 902, and at 904 the server receives a request from a client for a first resource. For instance, the request can include data that identifies a version of the client. At 906, the server identifies the version of the client based at least in part upon the request. At 908, the server transmits, to the client, a version of the first resource that is compatible with the identified version of the client. The methodology 900 completes at 910.

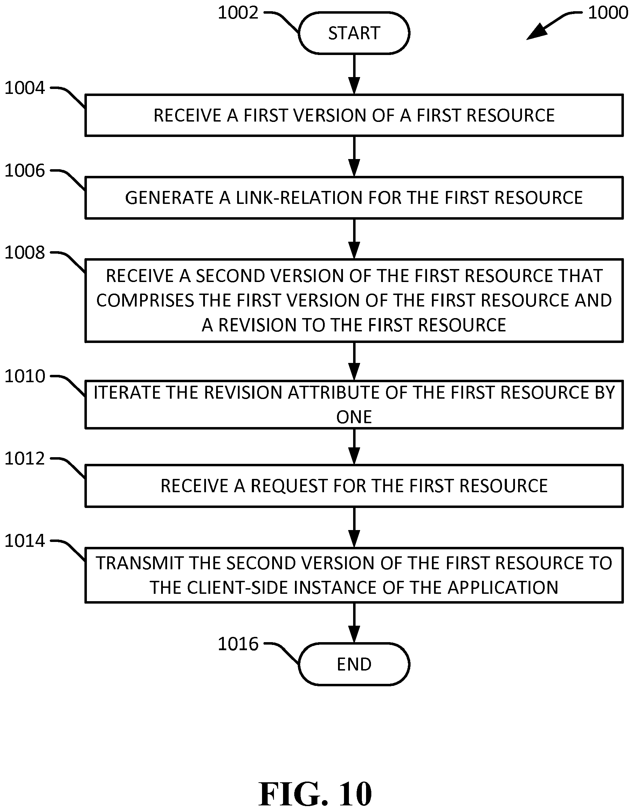

Referring now to Fig. 10, an exemplary methodology 1000 for modifying a resource and providing the modified resource to a client is illustrated. The methodology 1000 starts at 1002, and at 1004, a server receives a first version of a first resource. The server can be configured to maintain the first version of the first resource in computer-readable data storage that is available to the server. At 1006, the server generates a link-relation for the first resource, the link-relation indicating that the first resource is available to the client and further including a revision attribute that identifies the first resource as a first version of the first resource. In an exemplary embodiment, the server can generate the link-relation responsive to receiving a request for the first resource from the client.

At 1008, the server receives a second version of the first resource that comprises the first version of the first resource and a revision to the first resource. Alternatively, the server can receive a revision to the first version that may be appended to the first version of the first resource so as to generate the second version of the first resource. At 1010, the server increments the revision attribute of the first resource by one, thereby indicating that the second version of the first resource exists.

At 1012, the server receives a request for the first resource from the client. At 1014, responsive to receiving the request at 1012, the server transmits the second version of the first resource to the client. Optionally, the request from the client may identify a particular version of the resource (or a minimum version of the resource). Therefore, the server is configured to reply with a version of the resource that complies with the request, the most recent version of the resource, or a version of the resource that is compatible with the client. The methodology 1000 completes at 1016.

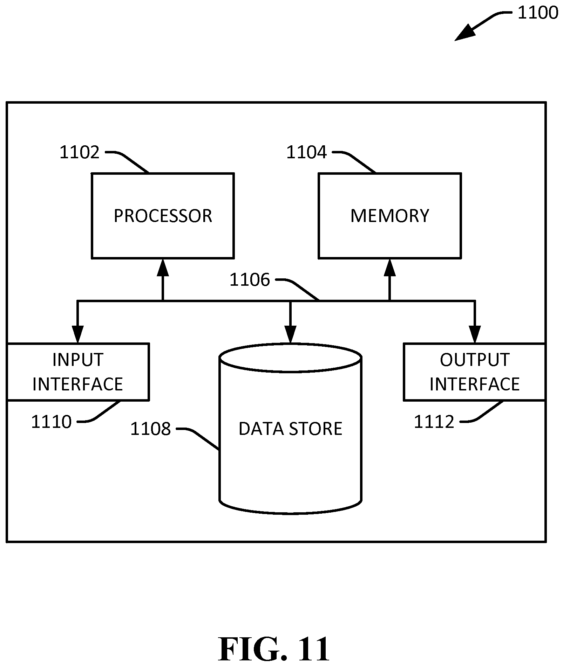

Referring now to Fig. 11, a high-level illustration of an exemplary computing device 1100 that can be used in accordance with the systems and methodologies disclosed herein is illustrated. For instance, the computing device 1100 may be used in a system that facilitates backwards-compatible feature-level version control of a distributed application through use of a RESTlike API. The computing device 1100 includes at least one processor 1102 that executes instructions that are stored in a memory 1104. The instructions may be, for instance, instructions for implementing functionality described as being carried out by one or more components discussed above or instructions for implementing one or more of the methods described above. The processor 1102 may access the memory 1104 by way of a system bus 1106. In addition to storing executable instructions, the memory 1104 may also store an instance of an application, a resource, versions of a resource, etc.

The computing device 1100 additionally includes a data store 1108 that is accessible by the processor 1102 by way of the system bus 1106. The data store 1108 may include executable instructions, data or metadata pertaining to executing a client or server of a distributed application, resources, API instructions or methods, etc. The computing device 1100 also includes an input interface 1110 that allows external devices to communicate with the computing device 1100. For instance, the input interface 1110 may be used to receive instructions from an external computer device, from a user, etc. The computing device 1100 also includes an output interface 1112 that interfaces the computing device 1100 with one or more external devices. For example, the computing device 1100 may display text, images, etc. by way of the output interface 1112.

It is contemplated that the external devices that communicate with the computing device 1100 via the input interface 1110 and the output interface 1112 can be included in an environment that provides substantially any type of user interface with which a user can interact. Examples of user interface types include graphical user interfaces, natural user interfaces, and so forth. For instance, a graphical user interface may accept input from a user employing input device(s) such as a keyboard, mouse, remote control, or the like and provide output on an output device such as a display. Further, a natural user interface may enable a user to interact with the computing device 1100 in a manner free from constraints imposed by input device such as keyboards, mice, remote controls, and the like. Rather, a natural user interface can rely on speech recognition, touch and stylus recognition, gesture recognition both on screen and adjacent to the screen, air gestures, head and eye tracking, voice and speech, vision, touch, gestures, machine intelligence, and so forth.

Additionally, while illustrated as a single system, it is to be understood that the computing device 1100 may be a distributed system. Thus, for instance, several devices may be in communication by way of a network connection and may collectively perform tasks described as being performed by the computing device 1100.

Various functions described herein can be implemented in hardware, software, or any combination thereof. If implemented in software, the functions can be stored on or transmitted over as one or more instructions or code on a computer-readable medium. Computer-readable media includes computer-readable storage media. A computer-readable storage media can be any available storage media that can be accessed by a computer. By way of example, and not limitation, such computer-readable storage media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal is not included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communication medium. Combinations of the above should also be included within the scope of computer-readable media.

Alternatively, or in addition, the functionally described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), etc. The processor module and/or a combination of the processor module and associated memory described herein is intended to encompass any of such hardware logic components.

What has been described above includes examples of one or more embodiments. It is, of course, not possible to describe every conceivable modification and alteration of the above devices or methodologies for purposes of describing the aforementioned aspects, but one of ordinary skill in the art can recognize that many further modifications and permutations of various aspects are possible. Accordingly, the described aspects are intended to embrace all such alterations, modifications, and variations that fall within the scope of the appended claims. Furthermore, to the extent that the term "includes" is used in either the details description or the claims, such term is intended to be inclusive in a manner similar to the term "comprising" as "comprising" is interpreted when employed as a transitional word in a claim.

## Claims

1. A computing device comprising:
a processor module; and
a memory that comprises a client-side instance of a distributed application executed by the processor module, the distributed application supporting communication between the client-side instance of the application and a server-side instance of the application through use of an application programming interface (API) that complies with a representational state transfer (REST) architecture, the API supporting revision of a resource maintained by the server-side instance of the application independent of other revisions to the distributed application, wherein the client-side instance of the distributed application comprises:
a requester component that transmits a request to the server-side instance of the application for a first resource maintained by the server-side instance of the distributed application, the request comprising at least one of an identifier of the first resource or a relation attribute that describes content of the first resource, wherein the client-side instance of the distributed application is compatible with a first version of the first resource; and
a receiver component configured to receive a reply to the request, the reply comprising a second version of the first resource, the second version of the first resource comprising the first version of the first resource and a revision to the first version of the first resource.

2. The computing device of claim 1, the reply comprising a revision attribute for a second resource that identifies the second resource as being a *Kth* version of the second resource, the client-side instance of the application further comprising a revision detection component that determines that the second resource has been revised based at least in part upon a comparison between the revision attribute for the second resource and a revision attribute for a prior version of the second resource.

3. The computing device of claim 1, the reply comprising data that identifies a version of the server-side instance of the distributed application, the client-side instance of the distributed application further comprising a revision detection component that infers a revision to the server-side instance of the application based at least in part upon a comparison between the data that identifies the version of the server-side instance of the distributed application and content of a previously received reply from the server-side instance of the distributed application.

4. The computing device of claim 1, the reply comprising a link-relation comprised by the first resource, the link-relation identifying that a second resource is available to the client-side instance of the application, the link relation comprising:
an identifier of the second resource;
a relation attribute that describes a subject matter of the second resource; and a revision attribute that identifies a version of the second resource.

5. The computing device of claim 4, the requester component further configured to transmit a request to the server-side instance of the distributed application for the second resource, the request comprising at least one of the identifier of the second resource or the relation attribute that describes the subject matter the second resource.

6. The computing device of claim 1, the distributed application being a unified communications application.

7. A method executed by a processor module of a computing device, the method comprising:
receiving a command to execute a client-side instance of a distributed application that supports bi-directional communication between the client-side instance and a server-side instance of the distributed application, an application programming interface (API) supporting the bi-directional communication, the API complying with a representational state transfer (REST) architecture and supporting revision of a resource maintained by the server-side instance of the distributed application independent of revision to a remainder of the distributed application; and
executing the client-side instance of the distributed application responsive to receiving the command, wherein executing the client-side instance of the distributed application comprises transmitting a request for a first resource to the server-side instance of the distributed application, wherein the request comprises at least one of an identifier of the first resource or a relation attribute that describes a subject matter the first resource, wherein the client-side instance of the distributed application is compatible with a first version of the first resource and the method further comprising:
receiving a reply to the request from the server-side instance of the distributed application, the reply comprising a second version of the first resource, the second version of the first resource comprising the first version of the first resource and a revision to the first version of the first resource.

## Patentansprüche

1. Datenverarbeitungsvorrichtung, die Folgendes umfasst:
ein Prozessormodul und
einen Speicher, der eine Client-Seiten-Instanz einer verteilten Anwendung, die von dem Prozessormodul ausgeführt wird, umfasst, wobei die verteile Anwendung eine Kommunikation zwischen der Client-Seiten-Instanz der Anwendung und einer Server-Seiten-Instanz der Anwendung durch Verwendung einer Anwendungsprogrammierschnittstelle ("application programming interface", API), die einer REST-Architektur (REST = "representational state transfer") entspricht, unterstützt, wobei die API eine Revision einer Ressource, die von der Serverseiten-Instanz der Anwendung gepflegt wird, unabhängig von anderen Revisionen der verteilten Anwendung unterstützt, wobei die Client-Seiten-Instanz der verteilten Anwendung Folgendes umfasst:
eine Anfordererkomponente, die eine Anforderung an die Server-Seiten-Instanz der Anwendung nach einer ersten Ressource, die von der Server-Seiten-Instanz der verteilten Anwendung gepflegt wird, überträgt, wobei die Anforderung mindestens eine bzw. eines von einer Kennung der ersten Ressource oder einem Relationsattribut, das einen Inhalt der ersten Ressource beschreibt, umfasst, wobei die Client-Seiten-Instanz der verteilten Anwendung mit einer ersten Version der ersten Ressource kompatibel ist; und
eine Empfängerkomponente, die dazu konfiguriert ist, eine Antwort auf die Anforderung zu empfangen, wobei die Antwort eine zweite Version der ersten Ressource umfasst, wobei die zweite Version der ersten Ressource die erste Version der ersten Ressource und eine Revision der ersten Version der ersten Ressource umfasst.

2. Datenverarbeitungsvorrichtung nach Anspruch 1, wobei die Antwort ein Revisionsattribut für eine zweite Ressource umfasst, das die zweite Ressource als eine *K-te* Version der zweiten Ressource identifiziert, wobei die Client-Seiten-Instanz der Anwendung weiterhin eine Revisionserkennungskomponente umfasst, die bestimmt, dass die zweite Ressource auf der Basis von zumindest zum Teil einem Vergleich zwischen dem Revisionsattribut für die zweite Ressource und einem Revisionsattribut für eine frühere Version der zweiten Ressource revidiert wurde.

3. Datenverarbeitungsvorrichtung nach Anspruch 1, wobei die Antwort Daten umfasst, die eine Version der Server-Seiten-Instanz der verteilten Anwendung identifizieren, wobei die Client-Seiten-Instanz der Anwendung weiterhin eine Revisionserkennungskomponente umfasst, die eine Revision der Server-Seiten-Instanz der Anwendung auf der Basis von zumindest zum Teil einem Vergleich zwischen den Daten, die die Version der Server-Seiten-Instanz der verteilten Anwendung identifizieren, und einem Inhalt einer zuvor empfangenen Antwort von der Server-Seiten-Instanz der verteilten Anwendung ableitet.

4. Datenverarbeitungsvorrichtung nach Anspruch 1, wobei die Antwort eine Verknüpfungsrelation umfasst, die von der ersten Ressource umfasst wird, wobei die Verknüpfungsrelation identifiziert, dass eine zweite Ressource für die Client-Seiten-Instanz der Anwendung verfügbar ist, wobei die Verknüpfungsrelation Folgendes umfasst:
eine Kennung der zweiten Ressource;
ein Relationsattribut, das einen Gegenstand der zweiten Ressource beschreibt; und ein Revisionsattribut, das eine Version der zweiten Ressource identifiziert.

5. Datenverarbeitungsvorrichtung nach Anspruch 4, wobei die Anfordererkomponente weiterhin dazu konfiguriert ist, eine Anforderung an die Server-Seiten-Instanz der verteilten Anwendung nach der zweiten Ressource zu übertragen, wobei die Anforderung mindestens eine bzw. eines der Kennung der zweiten Ressource oder des Relationsattributs, das den Gegenstand der zweiten Ressource beschreibt, umfasst.

6. Datenverarbeitungsvorrichtung nach Anspruch 1, wobei die verteilte Anwendung eine vereinheitlichte Kommunikationsanwendung ist.

7. Verfahren, das von einem Prozessormodul einer Datenverarbeitungsvorrichtung ausgeführt wird, wobei das Verfahren Folgendes umfasst:
Empfangen eines Befehls zum Ausführen einer Client-Seiten-Instanz einer verteilten Anwendung, die eine bidirektionale Kommunikation zwischen der Client-Seiten-Instanz und einer Server-Seiten-Instanz der verteilten Anwendung unterstützt, wobei eine Anwendungsprogrammierschnittstelle ("application programming interface", API) die bidirektionale Kommunikation unterstützt, wobei die API einer REST-Architektur (REST = "representational state transfer") entspricht und eine Revision einer Ressource, die von der Serverseiten-Instanz der verteilten Anwendung gepflegt wird, unabhängig von einer Revision eines Rests der verteilten Anwendung unterstützt; und
Ausführen der Client-Seiten-Instanz der verteilten Anwendung als Reaktion auf das Empfangen des Befehls, wobei das Ausführen der Client-Seiten-Instanz der verteilten Anwendung das Übertragen einer Anforderung nach einer ersten Ressource an die Server-Seiten-Instanz der verteilten Anwendung umfasst, wobei die Anforderung mindestens eine bzw. eines von einer Kennung der ersten Ressource oder einem Relationsattribut, das einen Gegenstand der ersten Ressource beschreibt, umfasst, wobei die Client-Seiten-Instanz der verteilten Anwendung mit einer ersten Version der ersten Ressource kompatibel ist, und wobei das Verfahren weiterhin Folgendes umfasst:
Empfangen einer Antwort auf die Anforderung von der Server-Seiten-Instanz der verteilten Anwendung, wobei die Antwort eine zweite Version der ersten Ressource umfasst, wobei die zweite Version der ersten Ressource die erste Version der ersten Ressource und eine Revision der ersten Version der ersten Ressource umfasst.

## Revendications

1. Un dispositif informatique comprenant :
un module de processeur ; et
une mémoire qui comprend une instance côté client d'une application distribuée exécutée par le module de processeur, l'application distribuée prenant en charge la communication entre l'instance côté client de l'application et une instance côté serveur de l'application par le biais de l'utilisation d'une interface de programmation d'application (Application Programming Interface ou API) qui est conforme à une architecture de transfert d'état représentationnel (Representational State Transfer ou REST), l'API prenant en charge la révision d'une ressource maintenue par l'instance côté serveur de l'application indépendamment d'autres révisions au niveau de l'application distribuée, dans lequel une instance côté client de l'application distribuée comprend :
un composant demandeur qui transmet une demande à l'instance côté serveur de l'application pour une première ressource maintenue par l'instance côté serveur de l'application distribuée, la demande comprenant un ou plusieurs identifiants de la première ressource ou un attribut de relation qui décrit le contenu de la première ressource ; et
un composant récepteur configuré pour recevoir une réponse à la demande, la réponse comprenant une deuxième version de la première ressource, la deuxième version de la première ressource comprenant la première version de la première ressource et une révision de la première version de la première ressource.

2. Le dispositif informatique selon la revendication 1, la réponse comprenant un attribut de révision pour une deuxième ressource qui identifie la deuxième ressource comme étant une version K*th* de la deuxième ressource, l'instance côté client de l'application comprenant en outre un composant de détection de révision qui détermine que la deuxième ressource a été révisée sur la base au moins en partie d'une comparaison entre l'attribut de révision pour la deuxième ressource et un attribut de révision pour une version antérieure de la deuxième ressource.

3. Le dispositif informatique selon la revendication 1, la réponse comprenant des données qui identifient une version de l'instance côté serveur de l'application distribuée, l'instance côté client de l'application distribuée comprenant en outre un composant de détection de révision qui déduit une révision de l'instance côté serveur de l'application sur la base au moins en partie d'une comparaison entre les données qui identifient la version de l'instance côté serveur de l'application distribuée et un contenu d'une réponse reçue précédemment de l'instance côté serveur de l'application distribuée.

4. Le dispositif informatique selon la revendication 1, la réponse comprenant une relation de liaison constituée par la première ressource, la relation de liaison identifiant qu'une deuxième ressource est disponible au niveau de l'instance côté client de l'application, la relation de liaison comprenant :
un identifiant de la deuxième ressource ;
un attribut de relation qui décrit un sujet traité de la deuxième ressource ; et
un attribut de révision qui identifie une version de la deuxième ressource.

5. Le dispositif informatique selon la revendication 4, le composant demandeur configuré en outre pour transmettre une demande à l'instance côté serveur de l'application distribuée pour la deuxième ressource, la demande comprenant un ou plusieurs identifiants de la deuxième ressource ou l'attribut de relation qui décrit le sujet traité par la deuxième ressource.

6. Le dispositif informatique selon la revendication 1, l'application distribuée étant une application de communications unifiées.

7. Un procédé exécuté par un module de processeur d'un dispositif informatique, le procédé consistant à :
recevoir un ordre d'exécuter une instance côté client d'une application distribuée qui prend en charge une communication bidirectionnelle entre l'instance côté client et une instance côté serveur de l'application distribuée, une interface de programmation d'application (API) prenant en charge la communication bidirectionnelle, l'API étant conforme à une architecture de transfert d'état représentationnel (REST) et prenant en charge la révision d'une ressource maintenue par l'instance côté serveur de l'application distribuée indépendamment de révisions du restant de l'application distribuée ; et
exécuter l'instance côté client de l'application distribuée en réponse à la réception de l'ordre, dans lequel l'exécution de l'instance côté client de l'application distribuée consiste à transmettre une demande pour une première ressource à l'instance côté serveur de l'application distribuée, dans lequel la demande comprend un ou plusieurs identifiants de la première ressource ou un attribut de relation qui décrit un sujet traité par la première ressource, dans lequel l'instance côté serveur de l'application distribuée est compatible avec une première version de la première ressource, et le procédé consistant en outre à :
recevoir une réponse à la demande en provenance de l'instance côté serveur de l'application distribuée, la réponse comprenant une deuxième version de la première ressource, la deuxième version de la première ressource comprenant la première version de la première ressource et une révision de la première version de la première ressource.
